# EUROPÄISCHE PATENTANMELDUNG

(11) **EP 1 463 378 A2**
(43) Veröffentlichungstag der Anmeldung: **29.09.2004**
(21) Anmeldenummer: 04005337.3
(22) Anmeldetag: 05.03.2004
(51) Int. Cl.: H04S 3/00

(54) **Verfahren zur Bestimmung einer Einfallsrichtung eines Signals einer akustischen Signalquelle und Vorrichtung zur Durchführung des Verfahrens**

(30) Priorität: 25.03.2003 DE 10313331
(71) Anmelder: Siemens Audiologische Technik GmbH, 91058 Erlangen (DE)
(72) Erfinder: Fischer, Eghart, 91126 Schwabach (DE)
(74) Vertreter: Berg, Peter, Dipl.-Ing.

(57) **Zusammenfassung**

Zur Bestimmung einer Einfallsrichtung eines Signals (S1,S2) einer akustischen Signalquelle wird mithilfe eines Richtmikrofonsystems (RMS,RM1,RM2), das mindestens zwei Mikrofone (M1,...M5) aufweist, zuerst eine Mehrzahl von Richtmikrofonsignalen (RMS1,RMS2) erzeugt, deren richtungsabhängige Empfindlichkeitsverteilungen jeweils in einer Richtung ein Minimum aufweisen. Eine Bewertung der Richtmikrofonsignale (RMS1,RMS2) nach einem Maß ermöglicht ist, das Richtmikrofonsignal (RMS1,RMS2), das am meisten durch die dazugehörige richtungsabhängige Empfindlichkeitsverteilung beeinflusst ist, zu bestimmen, wobei der Einfallsrichtung diejenige Richtung zugeordnet wird, in der das Minimum der Empfindlichkeitsverteilung dieses Richtmikrofonsignals (RMS1,RMS2) liegt.

## Beschreibung

Die Erfindung betrifft ein Verfahren zur Bestimmung einer Einfallsrichtung eines Signals einer akustischen Signalquelle mithilfe eines Richtmikrofonsystems, das mindestens zwei Mikrofone aufweist, sowie eine Vorrichtung zur Durchführung des Verfahrens.

Für verschiedene akustische Signalverarbeitungsalgorithmen ist es notwendig, die Einfallsrichtung eines Signals zu kennen. Dies ist z.B. bei steuerbaren Richtmikrofonsystemen von Bedeutung, die eine gezielte Unterdrückung von Störsignalen ermöglichen. Dazu werden z.B. Mikrofone eines Richtmikrofonsystems bezüglich der Einfallsrichtung derart durch ein Abgleichen optimiert, dass sie den Störsignalanteil im Richtmikrofonsignal bestmöglichst eliminieren.

Des Weiteren ist die Lokalisation und Frequenzbestimmung bei der akustischen Szenenanalyse (Auditory Scene Analysis, ASA) von Bedeutung. In einer solchen Analyse werden z.B. ein Winkel, unter dem ein Signal einfällt, eine Frequenz des Signals oder auch ein Abstand von der Signalquelle bestimmt.

Zur Bestimmung der Einfallsrichtung existieren verschiedene Verfahren, die auf einer Korrelationsanalyse zwischen verschieden lange verzögerten Mikrofonsignalen beruhen. In Abhängigkeit von der Korrelation und der Geometrie der Mikrofone wird die Einfallsrichtung abgeschätzt. Diese Verfahren sind jedoch für kleine Mikrofonabstände, wie sie z.B. bei Einohr-Hörgeräten vorliegen, eher ungeeignet, da hier typischerweise die maximale Laufzeit zwischen zwei Mikrofonen weniger als eine Abtastperiode beträgt. Bei einer Abtastrate von 20 KHz legt Schall in einer Abtastperiode ca. 17 mm zurück. Bei typischen Mikrofonabständen in Richtmikrofonsystemen von 8 bis 12 mm sind diese Verfahren ungenau.

Zusätzlich werden beispielsweise beim Verwenden des Richtmikrofons in einem Hörhilfsgerät, das am Kopf benutzt wird, sogenannte kopfbezogene Übertragungsfunktionen (Head Related Transfer Functions, HRTFs)) wirksam. Diese verfälschen das Ergebnis der Richtungsschätzung bei der Lokalisation der Signalquelle im Vergleich zur Situation eines im Freifeld benutzten Richtmikrofons, das akustisch nicht durch die Umgebung beeinflusst wird. Ein weiterer Nachteil der Richtungsschätzung mit zwei oder mehreren auf einer Achse angeordneten Mikrofonen ist der, dass im Freifeld die Richtung nicht eindeutig bestimmbar ist, da es stets ein zur Mikrofonachse symmetrisches Ergebnis gibt. Das heißt, eine solche Abschätzung der Einfallsrichtung ist nicht eindeutig.

Aus DE 199 27 278 C1 ist ein Verfahren zum Anpassen eines Hörhilfegeräts sowie ein Hörhilfegerät bekannt. Dabei wird ein Hörhilfegerät mit mehreren Mikrofonen, die zum Erzeugen einer Richtcharakteristik miteinander verschaltet sind, während des Tragens in einem geeigneten Messraum beschallt und die Richtcharakteristik aufgenommen. Sich daraus ergebende Filterparameter sind den Mikrofonen nachgeschalteten parametrierbaren Filtern zuführbar und es ist damit die gewünschte ideale Richtcharakteristik unter Berücksichtigung der individuellen Gegebenheiten beim Tragen des Hörhilfegeräts approximierbar. Dieses Verfahren ermöglicht es Filterparameter zur Amplituden- und/oder Phasenganganpassung der von den Mikrofonen aufgenommenen Signale zu erzeugen, um die Richtcharakteristik der Mikrofone zu optimieren.

Der Erfindung liegt die Aufgabe zugrunde, ein Verfahren und eine Vorrichtung anzugeben, mit denen der Einfallswinkel eines akustischen Signals bestimmt werden kann.

Die erstgenannte Aufgabe wird erfindungsgemäß durch ein Verfahren zur Bestimmung einer Einfallsrichtung eines Signals einer akustischen Signalquelle mithilfe eines Richtmikrofonsystems, das mindestens zwei Mikrofone aufweist, gelöst, wobei zuerst eine Mehrzahl von Richtmikrofonsignalen durch gewichtetes Kombinieren der Signale der beiden Mikrofone erzeugt wird, wobei die Gewichtung jeweils eine richtungsabhängige Empfindlichkeitsverteilung des Richtmikrofonsignals bestimmt und die Empfindlichkeitsverteilung in einer Richtung ein Minimum aufweist, wobei anschließend die Richtmikrofonsignale nach einem Maß bewertet werden, das die Beeinflussung des jeweiligen Richtmikrofonsignals durch die dazugehörige richtungsabhängige Empfindlichkeitsverteilung angibt, wobei anschließend dasjenige Richtmikrofonsignal bestimmt wird, das im Vergleich mit der Mehrzahl von Richtmikrofonsignalen mit einem Extremwert als Maß bewertet wurde und abschließendes Bestimmen der Einfallsrichtung als diejenige Richtung, in der das Minimum der richtungsabhängigen Empfindlichkeitsverteilung dieses Richtmikrofonsignals liegt. Beim gewichteten Kombinieren kann dabei z.B. eine Verzögerung mithilfe eines Phasenfaktors und eine Amplitudenänderung durch einen Amplitudenfaktor erzielt werden.

Grundlegend für das Verfahren zur Bestimmung einer Einfallsrichtung ist die Erzeugung einer Mehrzahl von Richtmikrofonsignalen. Dabei weisen die Richtmikrofonsignale jeweils verschiedene richtungsabhängige Empfindlichkeitsverteilungen mit einem in einer Richtung liegenden Minimum auf. Liegt eine Signalquelle in Richtung des Minimums, ist der Empfang des Richtmikrofonsystems nicht so empfindlich wie der Empfang eines Signals einer Signalquelle, die in einer Richtung maximaler Empfindlichkeit liegt.

Im Vergleich mit dem Fall eines Maximums ist es meist einfacher, ein Minimum der Empfindlichkeit auf einen kleineren Bereich verschiedener Richtungen zu beschränken. In einer Empfindlichkeitsverteilung, die auch als Richtcharakteristik bezeichnet wird, kann entsprechend ein enger lokalisierter Einschnitt der Empfindlichkeit erreicht werden. Dies ist z.B. bei der Erzeugung einer Richtcharakteristik 1. Ordnung mit zwei Mikrofonen der Fall, die einen relativ breiten Richtkegel 1. Ordnung und schmale Minima aufweist.

Entscheidend für das Verfahren ist die Wahl des Maßes, welche die Beeinflussung des jeweiligen Richtmikrofonsignals durch die dazugehörige richtungsabhängige Empfindlichkeitsverteilung angibt. Auf Seiten des Signals kann zur Bewertung z.B. die Signalenergie herangezogen werden. Alternativ könnte man den Signalpegel, eine vom Signal erzeugte Spannung, einen Betrag des Signals, ein Signal zu Rauschverhältnis des Richtmikrofonsignals oder die Kehrwerte dieser Größen inklusive der Signalenergie bestimmen. Voraussetzung für eine geeignete Größe ist, dass sie direkt von der Richtcharakteristik beeinflusst wird.

Kennt man den Einfluss der Empfindlichkeitsverteilung, insbesondere der Einfluss des Minimums, auf das Maß, kann man die einzelnen Richtmikrofonsignale nach dem Maß bewerten. Vollzieht man dann noch einen Vergleich innerhalb der Mehrzahl von Richtmikrofonsignalen, z.B. indem man beispielsweise eine Rangliste nach dem Grad ihrer Beeinflussung erstellt, so kann man dasjenige Richtmikrofonsignal bestimmen, das am meisten beeinflusst ist, d.h. das mit einem Extremwert bewertet wurde. Ein solches Richtmikrofonsignal weist z.B. eine minimale Signalenergie auf.

Die Einfallsrichtung des Signals ist durch die Richtung des Minimums in der Empfindlichkeitsverteilung gegeben, die zu dem mit dem Extremwert bewerteten Richtmikrofonsignal gehört. Für eine eindeutige Zuordnung ist entsprechend ein eindeutiges Minimum Voraussetzung.

Ein eindeutiges Minimum der Empfindlichkeit, das in nur einer Richtung vorliegt, setzt eine asymmetrischen Empfindlichkeitsverteilung voraus. Normalerweise werden Richtmikrofonsysteme in asymmetrischen akustischen Umgebungen benutzt. Beispielsweise bewirkt der Einfluss eines Kopfes bei einem in einem Hörhilfsgerät eingebauten Richtmikrofon eine Asymmetrie in seiner durch die Richtcharakteristik gegebenen Empfindlichkeit.

Für das Freifeld dagegen können nur symmetrische Empfindlichkeitsverteilungen erzeugt werden, welche die Symmetrie des Freifelds und der Mikrofonanordnung widerspiegeln und somit auch mehrere Richtungen zu einem Minimum aufweisen können. Allerdings können z.B. für den Fall einer solchen Mehrdeutigkeit mehrere paarweise Kombinationen von mindestens 3 Mikrofonen benutzt werden, um eine Eindeutigkeit des Verfahrens zu gewährleisten. Dabei wird beispielsweise durch Kombination von zwei symmetrischen Richtcharakteristiken eine Eindeutigkeit erreicht.

In einer besonders vorteilhaften Ausführungsform des Verfahrens ist das Maß die Energie der Richtmikrofonsignale und als Einfallsrichtung wird die Richtung des Minimums derjenigen Empfindlichkeitsverteilung bestimmt, welche die niedrigste Richtmikrofonsignalenergie aufweist. Dies hat den Vorteil, dass das Maß, in diesem Fall die Energie einfach zugänglich ist, da sie z.B. als Spannungswert des Signalpegels des Richtmikrofonsignals unter Berücksichtigung eines eventuellen Offsets vorliegt.

In einer anderen vorteilhaften Ausführungsform ist das Maß die reziproke Signalenergie eines Richtmikrofonsignals, die eine Wahrscheinlichkeit angibt, mit der die Richtung des Minimums der entsprechenden Empfindlichkeitsverteilung die Einfallsrichtung des Signals ist. Diese wahrscheinlichkeitsorientierte Bestimmung der Einfallsrichtung ist besonders dann von Vorteil, wenn mehrere Signale aus unterschiedlichen Einfallsrichtungen vorliegen. Bei der Auswertung können vorzugsweise die Wahrscheinlichkeiten der den Richtmikrofonsignalen zugeordneten Richtungen zu einer richtungsaufgelösten Wahrscheinlichkeitsverteilung zusammengefasst werden. In einer derartigen Wahrscheinlichkeitsverteilung wird die Wahrscheinlichkeit, dass aus einer Richtung ein Signal empfangen wird, über den gemessenen Richtungen, die z.B. in Form von Einfallswinkeln bestimmt sind, aufgetragen.

Die Möglichkeit über eine gewichtete Kombination der Signale der Mikrofone des Richtmikrofonsystems die Empfindlichkeit des Richtmikrofonsystems zu bestimmen, ist grundlegend für das Verfahren. Es gibt verschiedene Möglichkeiten Mikrofone eines Richtmikrofonsystems aneinander abzugleichen, d.h. gewichtet zu kombinieren.

In einer besonders vorteilhaften Ausführungsform des Verfahrens wird die Gewichtung derart bestimmt, dass sie die Empfindlichkeit des Richtmikrofonsystems für eine in Bezug zum Richtmikrofonsystem in einer Richtung liegenden Signalquelle minimiert. Je genauer das Minimum der Empfindlichkeit in eine Richtung gelegt werden kann, desto genauer können Signale von lokalisierten Signalquellen richtungsaufgelöst detektiert werden.

In einer besonders vorteilhaften Weiterbildung des Verfahrens wird die Gewichtung derart bestimmt, dass sie einen Effekt des akustischen Umfelds berücksichtigt, der aufgrund der Benutzung des Richtmikrofonsystems auftritt. Beispielsweise wird die Gewichtung bei einem Richtmikrofonsystem, das in einem Hörhilfsgerät verwendet wird, im getragenen Zustand bestimmt. D.h., dass das Richtmikrofonsystem bei der Bestimmung der Gewichtung an einem Kopf oder an einer Kopfimitation in einer der Benutzung entsprechenden Konstellation angeordnet ist. Ein Vorteil dieser Ausführungsform besteht darin, dass Mehrdeutigkeiten bei der Einfallsrichtungsbestimmung vermieden werden, indem der Einfluss des Kopfes z.B. durch Einbeziehung der HRTFs in das Verfahren berücksichtig wird und indem die durch den Kopf in das Richtmikrofonsystem induzierte Asymmetrie gezielt ausgenutzt wird. Dadurch wird es zusätzlich möglich eine winkeltreue Messung der Einfallsrichtung durchzuführen.

Zur Bestimmung einer Gewichtung wird beispielsweise eine Signalquelle, die sich in einer Richtung zum Richtmikrofonsystem befindet, durch Variation der Gewichtung der Mikrofonsignale aus dem Richtmikrofonsignal bestmöglichst entfernt. Die auf diese Art und Weise bestimmten Gewichtungen haben den Vorteil, dass sie unter kontrollierten Bedingungen und in einem feinen Raster jeweils optimiert auf eine Einfallsrichtung der Signalquelle erzeugt werden.

In einer besonders vorteilhaften Ausführungsform des Verfahrens weist die Gewichtung einen Amplituden- und/oder einen Phasenfaktor insbesondere zur Korrektur der Amplitude bzw. Phase eines der Mikrofonsignale auf. Die Gewichtung, beispielsweise in Form des Amplituden- und/oder Phasenfaktors, kann abgespeichert werden, wobei die Abspeicherung beispielsweise als frequenz- und richtungsabhängiges Kennfeld erfolgt. Zur Erzeugung der Richtmikrofonsignale können die verschiedenen Gewichtungen selektiv aus dem Speicher gelesen werden.

In einer besonders schnellen Ausführungsform des Verfahrens werden die verschiedenen Richtmikrofonsignale im wesentlichen gleichzeitig erzeugt.

In einer anderen Ausführungsform ändert die Gewichtung bei der Erzeugung der Mehrzahl von Richtmikrofonsignalen ihren Wert, um nacheinander Richtmikrofonsignale mit unterschiedlichen richtungsabhängigen Empfindlichkeiten zu erzeugen. Dies hat den Vorteil, dass die simultane Berechnung vieler Richtmikrofonsignale entfällt.

In einer besonders vorteilhaften Ausführungsform des Verfahrens wird der Frequenzbereich der Mikrofonsignale in Frequenzintervalle unterteilt, in denen jeweils das Verfahren durchgeführt wird. Dabei werden die Richtmikrofonsignale nach dem Maß der Beeinflussung in den verschiedenen Frequenzbändern bewertet. Auf diese Weise können z.B. auch zwei Signalquellen, die in unterschiedlichen Einfallsrichtungen und in unterschiedlichen Frequenzbändern liegen, in Hinblick auf Korrelationen untersucht werden. Bei einer beispielsweise zeitlichen Korrelation der Signale, könnten z.B. beide Signale von einer physikalischen Quelle stammen, wobei eines der Signale aufgrund einer Reflexion an einem bewegten Objekt in einem anderen Frequenzbereich unter einer anderen Einfallsrichtung empfangen wird (Echoverwandtschaft). Eine solche Korrelationsanalyse ist auch für mehrere Signalquellen in einem Frequenzband durchführbar, um z.B. Echoverwandtschaften ohne Frequenzverschiebung zu identifizieren.

Die zweitgenannte Aufgabe wird durch eine Vorrichtung zum Durchführen eines solchen Verfahrens gelöst, wobei die Vorrichtung ein Richtmikrofonsystem mit mindestens zwei Mikrofonen aufweist.

In einer vorteilhaften Ausführungsform sind die beiden Mikrofone jeweils mit einer Filterbank zur Unterteilung der Mikrofonsignale in Frequenzbänder verbunden, an deren Ausgängen Frequenzband-Signalanteile der Mikrofonsignale anliegen, wobei die Ausgänge der Filterbanken mit den gleichen Frequenzbändern paarweise mit einer Einheit verbunden sind, welche die Frequenzband-Signalanteile mit einer Gewichtung kombiniert, wobei die Gewichtung mittels einer die Amplitude des entsprechenden Frequenzband-Signalanteils verändernden Amplitudeneinheiten und/oder einer die Phase des entsprechenden Frequenzband-Signalanteils drehenden Phaseneinheit erfolgt, wobei die Amplitudeneinheit und die Phaseneinheit gemeinsam auf eines oder einzeln auf jeweils eines der Frequenzband-Signalanteile wirken, wobei die Einheiten mit einer Bewertungseinheit verbunden sind, welche die Richtmikrofonsignale nach einem Maß für die Beeinflussung bewertet und daraus eine Einfallsrichtung eines Signal einer Signalquelle bestimmt.

Weitere vorteilhafte Ausführungsformen der Erfindung sind durch die Merkmale der Unteransprüche gekennzeichnet.

Es folgt die Erläuterung von mehreren Ausführungsbeispielen der Erfindung anhand der Figuren 1 bis 7. Es zeigen:
- FIG 1: ein typisches Beispiel für den Einsatz eines Richtmikrofonsystems bei der Unterdrückung von akustischen Störsignalen,
- FIG 2: das Vorgehen beim Abgleichen zweier Mikrofonsignale,
- FIG 3: eine Empfindlichkeitsverteilung für ein im Freifeld abgeglichenes Richtmikrofonsystem sowie eine Empfindlichkeitsverteilung unter Berücksichtigung des Kopfeinflusses,
- FIG 4: eine schematische Verdeutlichung des Verfahrens zur Unterdrückung mindestens eines akustischen Störsignals,
- FIG 5: eine kombinierte Darstellung von Amplituden- und Phasenfaktoren im 400 Hz-Frequenzband für 5° Winkelschritte,
- FIG 6: eine richtungsabhängige Kennlinie für einen Amplitudenfaktor,
- FIG 7: zwei Wahrscheinlichkeitsverteilungen in zwei Frequenzbändern,
- FIG 8: eine Korrelationsanalyse einer Wahrscheinlichkeitsverteilung mit zwei Signalen,
- FIG 9: ein Ergebnis der Lokalisation einer bewegten Signalquelle ohne Kompensation der Kopfeffekte und
- FIG 10: ein Ergebnis der Lokalisation einer bewegten Signalquelle mit Kompensation der Kopfeffekte.

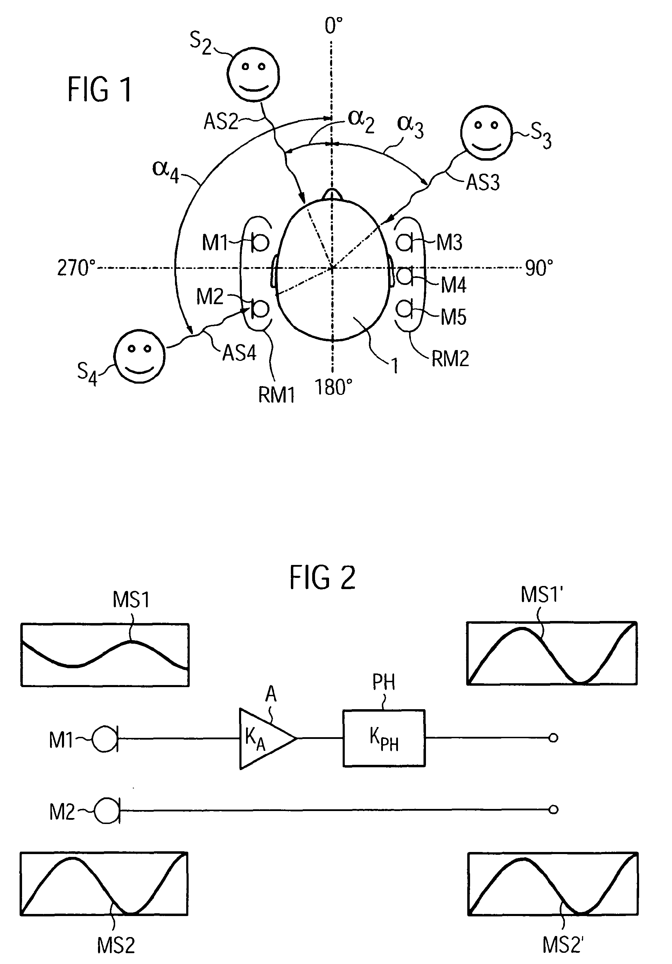

Figur 1 zeigt ein typisches Beispiel für den Einsatz eines Richtmikrofonsystems RM1,RM2 bei der Bestimmung einer Einfallsrichtung eines akustischen Signals. Dabei befinden sich eines oder mehrere Richtmikrofonsysteme RM1, RM2 in einem Hörhilfsgerät, welches von der Person 1 als Hörhilfe genutzt wird. Person 1 unterhält sich mit den Personen S2, S3, S4, die sich in verschiedenen Richtungen zur Person 1 befinden. Beispielsweise liegt die Abweichung der Position der Person S2 von der 0°-Achse um den Winkel α2 innerhalb eines konusförmig ausgebildeten Richtbereichs des Richtmikrofonsystems RM1.

Die Personen S3,S4 befinden sich in einem Winkel von α3 bzw. α4 zur 0°-Achse. Zur Erstellung einer ASA sollen die Signalquellen der akustische Signale AS2, AS3, AS4 lokalisiert werden, d.h. die Einfallsrichtungen der Signale AS2,AS3,AS4 sollen von einem der Richtmikrofonsysteme RM1,RM2 bestimmt werden.

Das Richtmikrofonsystem RM1 besteht aus zwei Mikrofonen M1,M2; das Richtmikrofonsystem RM2 besteht aus drei Mikrofonen M3, M4, M5. Die Hörhilfsgeräte, in denen die Richtmikrofonsysteme RM1,RM2 enthalten sind, können hinter dem Ohr oder im Ohr getragene Hörhilfsgeräte sein. Alternativ können durch Verschaltung der Mikrofone M1,M2 der einen Seite mit einem oder mehreren Mikrofonen M3, M4, M5 der anderen Seite weitere Richtmikrofonsysteme erzeugt werden.

Zur Bildung eines Richtmikrofonsignals werden die Signale von mindestens zwei Mikrofonen M1,...M5 gegebenenfalls verzögert und gewichtet miteinander kombiniert. Je nach Gewichtung weist das Richtmikrofonsystem eine andere richtungsabhängige Empfindlichkeit auf.

Eine solche Empfindlichkeitsverteilung wird als Richtcharakteristik des Richtmikrofonsystems bezeichnet. Sie kann z.B. folgendermaßen gemessen werden. Man setzt das Richtmikrofonsystem einem akustischen Signal mit konstanter Amplitude aus, wobei die Quelle des akustischen Signals, um das Richtmikrofonsystem bewegt werden kann. Für verschiedene Richtungen Die empfangene Signalenergie wird, d.h. für verschiedene Positionen der Signalquelle, wird die Signalenergie aufgenommen. Sie variiert bei gleicher Gewichtung aufgrund der richtungsabhängigen Empfindlichkeit des Richtmikrofonsystems.

Mithilfe eines ähnlichen Vorgehens kann man eine Gewichtung für eine bestimmte Empfindlichkeit auf eine in einer Richtung liegenden Signalquelle bestimmen. Dabei variiert man nicht die Richtung, in der die Signalquelle liegt, sondern man variiert stattdessen die Gewichtung. Die Empfindlichkeit des Richtmikrofonsystems wird dabei z.B. derart eingestellt, dass das Signal, das aus einer konstanten Richtung auf das Richtmikrofonsystem fällt, beispielsweise minimal empfangen oder sogar ganz eliminiert wird. Wiederholt man dies für mehrere Richtungen, d.h., rotiert man die Position der Signalquelle in beispielsweise 5°-Winkelschritten einmal um das Richtmikrofonsystem, erzeugt man sich einen Satz von Gewichtungen, die jeweils ein aus der entsprechenden Richtung auftreffende Signal minimieren.

Im Freifeld gemessene Richtcharakteristiken, die zwei Mikrofone aufweisen, sind symmetrisch zu einer Achse, die durch die Verbindungslinie der beiden Mikrofone gegeben ist. Allerdings werden Richtmikrofonsysteme jeweils in einem speziellen akustischen Umfeld eingesetzt, z.B. werden sie am Kopf wie in Figur 1 oder am Körper getragen. Das akustische Umfeld beeinflusst die Schallausbreitung und entsprechend die Richtcharakteristiken. Deswegen ist es vorteilhaft, die gewichtete Kombination zur Erzeugung der im Verfahren verwendeten Richtcharakteristiken im jeweils vorliegenden akustischen Umfeld durchzuführen, so dass die Gewichtungen den Effekt des akustischen Umfelds auf die akustischen Signale berücksichtigen.

Für den Fall eines in einem Hörhilfsgerät eingebauten Richtmikrofonsystems besteht neben der Möglichkeit, die Mikrofone am Kopf des jeweiligen Hörhilfsgeräteträgers abzugleichen, d.h. sie gewichtet zu kombinieren, auch die Möglichkeit den Abgleich mithilfe einer Kopfimitation, die beispielsweise einen Durchschnittskopf wiedergibt, durchzuführen.

Der Einfluss des Kopfes auf die Ausbreitung von Schallwellen, die mit einem am Kopf getragenen Mikrofon empfangen werden sollen, wird durch die sogenannten kopfbezogenen Übertragungsfunktionen (Head Related Transfer Function HRTF) bestimmt. Solche HRTFs können beispielsweise nach der vorhergehend beschriebenen Vorgehensweise bestimmt werden. Aus ihnen lassen sich Gewichtungen berechnen, die ebenfalls zu Richtmikrofonsignalen mit richtungsabhängigen Empfindlichkeiten führen.

In Figur 2 ist schematisch die gewichtete Kombination von zwei Mikrofonsignalen MS1, MS2 der Mikrofone M1,M2 dargestellt. Die Signale MS1, MS2 unterscheiden sich in ihrer Amplitude und in ihrer Phase. Ziel eines Abgleichs der beiden Mikrofone ist zum einen die Angleichung der Amplituden der Signale MS1, MS2 und zum anderen das Einstellen einer festen Phasenbeziehung. Ersteres wird beispielsweise durch Verstärkung mit einem festen Amplitudenfaktor K_{A} in einer Verstärkereinheit A erreicht. Letzteres wird z.B. mithilfe eines Phasendrehers PH erzielt, welcher die relative Phase, die in Figur 2 0° betragen soll, um den Phasenwinkel K_{PH} dreht.

Die Amplituden- und Phasenkorrektur kann auf ein Mikrofonsignal wirken. Dies ist in Figur 2 der Fall: Beide Korrekturfaktoren wirken auf das Mikrofonsignal MS1 und erzeugen ein korrigiertes Mikrofonsignal MS1'. Dies hat den offensichtlichen Vorteil eines einfachen Aufbaus, in dem nur ein Signal bearbeitet wird. Alternativ können die Korrekturen jeweils auf eines der Mikrofonsignale wirken.

Ein solcher Signalabgleich wird vorzugsweise in einem Frequenzband durchgeführt. Dazu wird der Frequenzbereich der Mikrofonsignale beispielsweise mithilfe einer Filterbank in mehrere Frequenzbänder unterteilt. Die Amplituden- und Phasenfaktoren K_{A}, K_{PH} bestimmen nun ihrerseits die richtungsabhängige Empfindlichkeit des jeweils erzeugten Richtmikrofonsystems, indem sie beispielsweise die Empfindlichkeit in einer Richtung im entsprechenden Frequenzband minimieren. Eine eindeutige Zuordnung eines Minimums zu einer Richtung ist nur im Fall einer asymmetrischen Empfindlichkeitsverteilung möglich, wie sie z.B. durch den Einfluss des Kopfes entsteht. Für das Freifeld dagegen können nur symmetrische Empfindlich-° keitsverteilungen erzeugt werden, welche die Symmetrie des Freifelds und der Mikrofonanordnung widerspiegeln.

Für das Verfahren werden die frequenz- und/oder richtungsabhängige Gewichtungen in Form von frequenz- und/oder richtungsabhängigen Kennlinien oder Funktionen oder als Datenpaare im Richtmikrofonsystem abgespeichert.

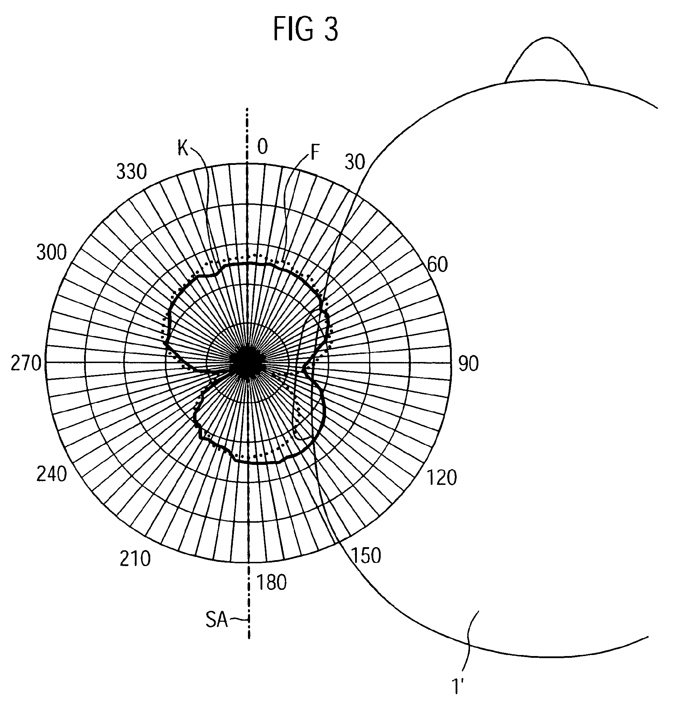

In Figur 3 werden zwei gemessen Richtcharakteristiken dargestellt. Dazu ist die Empfindlichkeit, die im Wesentlichen proportional zur Signalenergie ist, radial über alle Winkel von 0 bis 360° in 5°-Schritten aufgetragen.

Zum einen ist eine Richtcharakteristik F im Freifeld für eine akustisches Signal bei 500 Hz dargestellt. Man erkennt deutlich ihren symmetrischen Verlauf um die durch die Verbindungslinie der Richtmikrofone gegebene Symmetrieachse SA. Aufgrund der Symmetrie weist die Richtcharakteristik zwei Minima in Richtung 120° und 240° auf.

Zusätzlich ist eine Richtcharakteristik K in Figur 3 eingezeichnet, die den Einfluss eines angedeuteten Kopfes 1' auf die richtungsabhängige Empfindlichkeit des Richtmikrofonsystems berücksichtigt. Deutlich erkennt man das deutlich ausgeprägte Minimum bei 240°. Das Minimum auf der Seite des Kopfes 1' ist im Vergleich zum Freifeld schwächer ausgeprägt . Ein Richtmikrofonsystem, das aufgrund seiner Gewichtung die Richtcharakteristik K aufweist, wird ein Signal aus dem Bereich 240° wesentlich abgeschwächt empfangen.

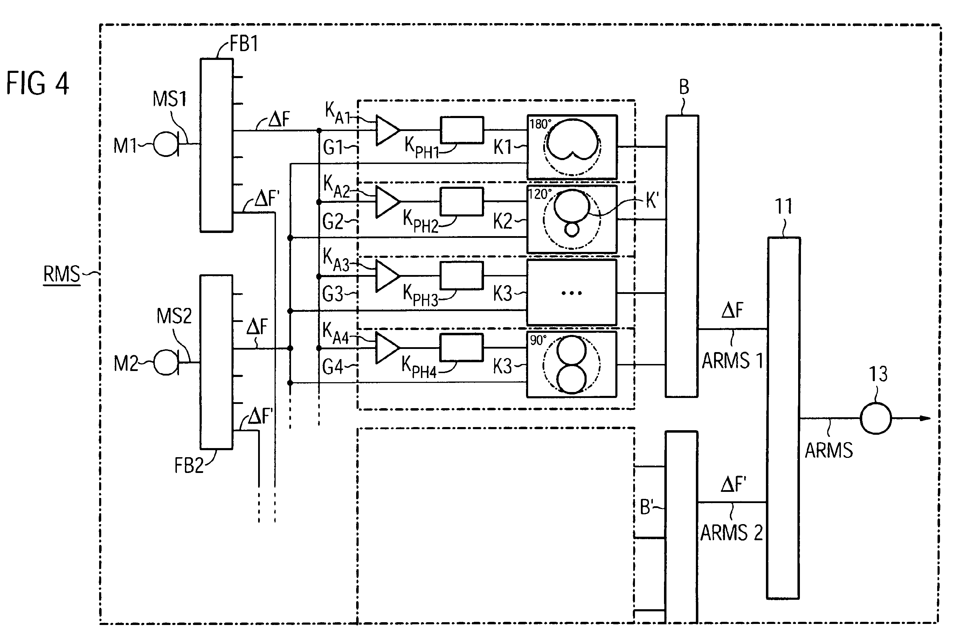

Figur 4 stellt schematisiert einen möglichen Aufbau einer Vorrichtung zum Durchführen des Verfahrens vor. Die Mikrofone M1, M2 sind jeweils mit einer Filterbank FB1 bzw. FB2 verbunden. An den Ausgängen der Filterbänke FB1, FB2 liegt jeweils ein Frequenzband ΔF, ΔF` der Mikrofonsignale S1, S2 an. Ausgänge mit einem übereinstimmenden Frequenzband ΔF, ΔF` sind paarweise mit einer Serie von gewichtet kombinierenden Einheiten G1,G2,G3,G4 verbunden. Das heißt, zur gewichteten Kombination stehen zum einen das auf das Frequenzband ΔF beschränkte Mikrofonsignal MS1 und zum anderen das auf das gleiche Frequenzband ΔF beschränkte Mikrofonsignal MS2 zur Verfügung.

In den gewichtet kombinierenden Einheiten G1, G2, G3, G4 wird jeweils das Mikrofonsignal MS1 mithilfe eines Amplitudenfaktors K_{A1},K_{A2},K_{A3},K_{A4} und eines Phasenfaktors K_{PH1}, K_{PH2}, K_{PH3}, K_{PH4} mit dem Signal des Mikrofons M2 abgeglichen. Die Erzeugung der Richtmikrofonsignale RMS1,RMS2 erfolgt durch beispielsweise die Bildung der Differenz des korrigierten Mikrofonsignals MS1 und des Mikrofonsignals MS2 in den Kombinationseinheiten K1,K2,K3,K4. Zur Verdeutlichung sind in die Kombinationseinheiten K1,K2,K3,K4 die entsprechenden Richtcharakteristiken K` schematisch eingezeichnet. Zusätzlich ist die Richtung angegeben, in der das Minimum der Richtcharakteristik liegt, beispielsweise für K` liegt das Minimum bei 120°.

Die Ausgänge der gewichtet kombinierenden Einheiten G1,G2,G3,G4 sind mit einer Bewertungseinheit B verbunden. Die Bewertungseinheit B vergleicht die Richtmikrofonsignale RMS1,RMS2 bezüglich eines Maßes, dass den Einfluss der jeweiligen Richtcharakteristik auf das Richtmikrofonsignal RMS1,RMS2 misst. Als Bewertungsmaß kann beispielsweise der Signalpegel, die Signalenergie, der Rauschanteil im Signal oder der Kehrwert der Signalenergie, d.h. der Wahrscheinlichkeit, dienen. Die so bewerteten Richtmikrofonsignal RMS1, RMS2 werden miteinander verglichen und das Richtmikrofonsignal RMS1, RMS2 bestimmt, dessen Bewertung ein Extremwert aufweist, d.h. z.B. bei der Bewertung anhand der Signalenergie minimale Signalenergie oder bei der Bewertung der Wahrscheinlichkeit maximale Wahrscheinlichkeit. Die Richtung des Minimums der Richtcharakteristik dieses Richtmikrofonsignals ist die Einfallsrichtung einer Signalquelle in diesem Frequenzband. Alternativ können z.B. die Wahrscheinlichkeiten für alle mit den gemessenen Richtmikrofonsignalen untersuchten Richtungen von der Bewertungseinheit an eine Analyseeinheit 11 übermittelt werden.

Analog wird in allen anderen Frequenzbändern ΔF' verfahren. Dabei werden eigene Amplituden- und Phasenfaktoren zur gewichteten Kombination verwendet.

Die Analyseeinheit wertet die in den verschiedenen Frequenzbereichen bestimmten Einfallsrichtungen aus, überprüft ihre Konsistenz und versucht z.B. Echosignale zu identifizieren.

Das Ergebnis der Analyseeinheit 11 wird z.B. einer Signalverarbeitungseinheit 13, beispielsweise einer Hörhilfsgerätsignalverarbeitung, zugeführt. Diese steuert mithilfe der Analyseergebnisse einen Algorithmus zur Störsignalunterdrückung oder führt eine Verstärkung des jeweils gewünschten Signals entsprechend dem Hörschaden des Trägers durch.

Das in Figur 4 verdeutlichte Verfahren basiert auf der Verarbeitung von Mikrofonsignalen in den einzelnen Frequenzbändern ΔF, ΔF'. Alternativ können die Mikrofonsignale MS1, MS2 mit Hilfe einer Fast-Fourier-Transformation (FFT) analysiert werden, und das Verfahren kann entsprechend auf die FFT-Koeffizienten angewandt werden.

Bei der oben erwähnten sukzessiven Erzeugung der Richtmikrofonsignale kann die Bewertungseinheit B schon während der Erzeugung Einfluss z.B. auf die Schrittweite im relevanten Richtungsbereich nehmen und somit adaptiv in die Gewichtungen der Mehrzahl von Richtmikrofonsignalen RMS1, RMS2 eingreifen.

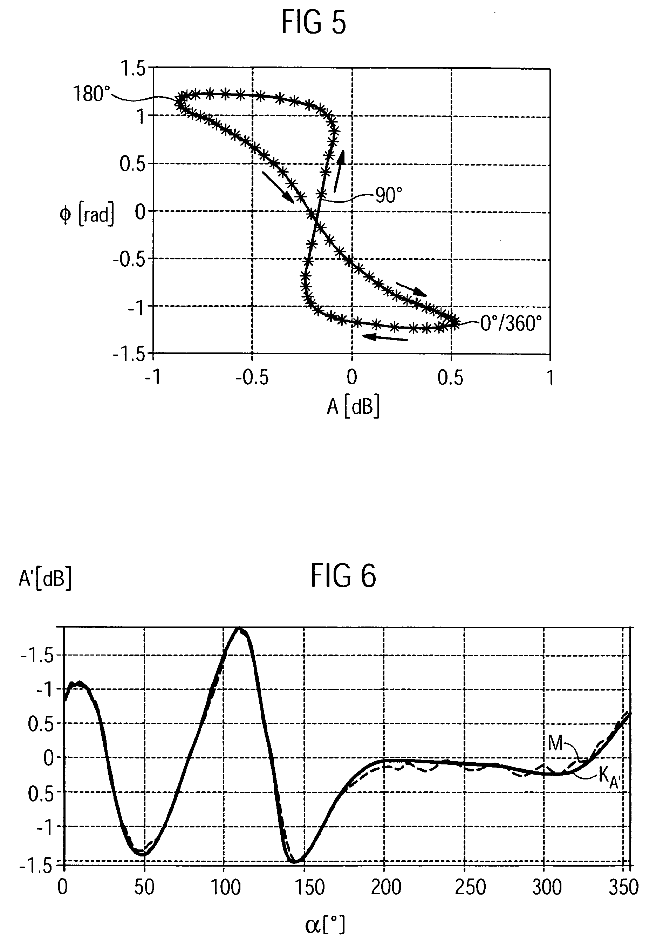

Figur 5 fasst beispielhafte Werte für die Amplituden- und Phasenfaktoren für ein Frequenzband zusammen. Aufgetragen ist in einer Richtung der Amplitudenfaktor A und in der anderen Richtung die Phasenverzögerung Φ der beiden Mikrofonsignale. Der Amplitudenfaktor A für 0° bzw. 360° beträgt beispielsweise ca. 0,5 dB. Der dazugehörige Phasenfaktor Φ ist ca. - 1,2. Jedes Sternchen entspricht einem Paar von Amplitudenund Phasenfaktoren A, Φ, die in 5°-Schritten angegeben sind. Deutlich erkennt man den asymmetrischen Verlauf der Faktorenverteilung aufgrund der Berücksichtigung des Kopfes auf die Schallausbreitung.

In Figur 6 wird die Darstellung eines Amplitudenfaktors A' als Kennlinie K_{A'} angegeben, welche die Richtungsabhängigkeit eines Amplitudenfaktors A' approximiert. Man erkennt zum einen eine strukturierte Messkurve M des Amplitudenfaktors A`. Die Messkurve wurde z.B. nach dem oben beschriebenen Vorgehensweise zur Anpassung der richtungsabhängigen Empfindlichkeit aufgenommen und beschriebt die Amplitudenfaktoren, die in den Richtungen α von 0° bis 360° eine minimale Empfindlichkeit erzeugen. Die Kennlinie K_{A}' reproduziert im Wesentlichen die Messkurve und ist im Richtmikrofonsystem abgespeichert. Alternativ könnte die Kennlinie K_{A}' aus den HRTFs berechnet werden.

Eine besonders vorteilhafte Vorgehensweise zur Bestimmung einer Einfallsrichtung eines akustischen Signals auf ein Richtmikrofonsystem z.B. eines Hörhilfsgeräts mit Hilfe des erfindungsgemäßen Verfahrens erfolgt beispielsweise folgendermaßen. Dabei werden frequenz- und winkelabhängigen Gewichtungen verwendet, die zusätzlich noch den Einfluss des Kopfes auf die Schallausbreitung berücksichtigen:

Für jedes von einer Anzahl von Frequenzbändern wird simultan der Ausgangspegel von mehreren in alle Richtungen um den Kopf zeigenden statischen Richtcharakteristiken 1. Ordnung gemessen. Falls in einem Frequenzband eine Quelle aktiv ist, zeigt das Minimum derjenigen Richtcharakteristik mit dem geringsten Ausgangspegel in die Richtung der Quelle.

Um sicher zu stellen, dass aus dem Index der Richtcharakteristik tatsächlich auf den Winkel geschlossen werden kann, muss der Einfluss des Kopfes berücksichtigt werden. Dies geschieht dadurch, dass jede auszuwertende Richtcharakteristik durch Messung ma Kopf oder Berechung aus den HRTFs pro Frequenzband und Winkel so modifiziert wird, das am Kopf tatsächlich ein ideales eindeutiges Minimum in der vorgegebenen Richtung entsteht. Diese Modifikation entsteht durch die Anwendung eines geeigneten Verzögerungs- und Verstärkungsfaktors für jedes berechnete Minimum.

Diese Vorgehensweise macht es möglich, durch Einbeziehen der HRTFs in die Lokalisation die Schalleinfallsrichtung winkeltreu zu messen. Des Weiteren kann durch die Ausnutzung der durch den Kopf induzierten Asymmetrie eine, im Gegensatz zum Freifeld eindeutige Schätzung der Schalleinfallsrichtung erfolgen. Durch Mehrfachmessung mit mehreren paarweise kombinierten Mikrofonen kann die Messung des Schalleinfallswinkels robust erfolgen.

Der Vorteil dieser Vorgehensweise besteht darin, dass Mehrdeutigkeiten bei der Lokalisation (Einfallsrichtungsbestimmung) vermieden werden, indem der Einfluss des Kopfes z.B. durch Einbeziehung der HRTFs in einen Lokalisierungsalgorithmus berücksichtigt wird und die durch den Kopf in das Richtmikrofonsystem induzierte Asymmetrie gezielt ausgenutzt wird.

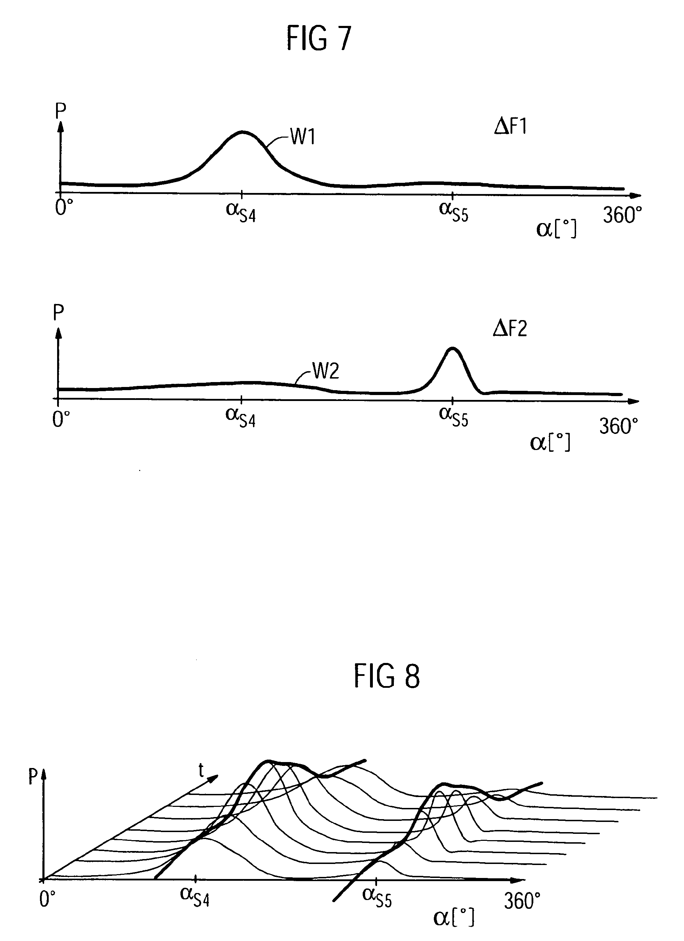

Die Figuren 7 und 8 verdeutlichen die Möglichkeiten der Analyse der gemessenen Wahrscheinlichkeiten P der Einfallsrichtungen. Figur 7 zeigt zwei mögliche gemessene Wahrscheinlichkeitsverteilungen W1,W2 in zwei Frequenzbändern ΔF1, ΔF2. Die Wahrscheinlichkeitsverteilungen W1 weist ein ausgeprägtes Maximum bei einem Winkel α_{S4} auf und die Wahrscheinlichkeitsverteilungen W2 weist eines bei einem Winkel α_{S5} auf. Zusätzlich sind jeweils ein leicht angedeutetes Maximum bei den Winkel α_{S5} bzw. α_{S4} erkennbar. Die Maxima deuten auf eine Quelle unter dem Winkel α_{S4} im Frequenzband ΔF1 und auf eine Quelle unter dem Winkel α_{S5} im Frequenzband ΔF2 hin, wobei die Quellen jeweils auch im anderen Frequenzband, wenn auch nur sehr schwach, emittieren.

Die Wahrscheinlichkeit P ist proportional zum Kehrwert der Energie. Zur Bestimmung der Einfallsrichtungen hätte auch nur die Signalenergie in den Frequenzbereichen gemessen werden können, wobei die Minima der Signalenergie ebenfalls die Einfallswinkel α_{S5} und α_{S4} ergeben würden. Die Darstellung als Wahrscheinlichkeitsverteilung bietet allerdings zusätzlich Information, wie z.B. die Breite der Verteilung des Maximums oder das Verhältnis Maximalwert zum Untergrund. Aus der Breite kann z.B. auf die Entfernung der Quelle geschlossen werden.

In Figur 8 ist eine Korrelationsanalyse einer Wahrscheinlichkeitsverteilung mit zwei Signalen in ihrem zeitlichen Verlauf über der Zeit t dargestellt. Man erkennt deutlich wie die Wahrscheinlichkeiten P für die beiden Signalquellen sich zeitlich synchron zu- und abnehmen. Die zeitliche Korrelation der Signale zeigt, dass beide Signale der gleichen Quelle entstammen. Das schwächere Signal unter dem Winkel α_{S5} könnte beispielsweise ein Echo des anderen Signals sein, welches nach einer Reflexion es vom Richtmikrofonsystem empfangen wird.

Alternativ könnten die beiden Signalquellen in unterschiedlichen Frequenzbändern detektiert worden sein. Die Korrelationsanalyse würde dann z.B. anhand der aufsummierten Wahrscheinlichkeit der beiden Frequenzbänder durchgeführt. Die Frequenzverschiebung des Echosignals könnte dann durch eine Reflexion an einem bewegten Objekt hervorgerufen worden sein.

Werden mehrere Mikrofone M1,...M5 zu einem Richtmikrofonsystem zusammengefasst, können auch Richtcharakteristiken höherer Ordnungen erzeugt werden, die in ihrer Struktur auf differenziertere Verteilungen von Störsignalquellen angepasst werden können.

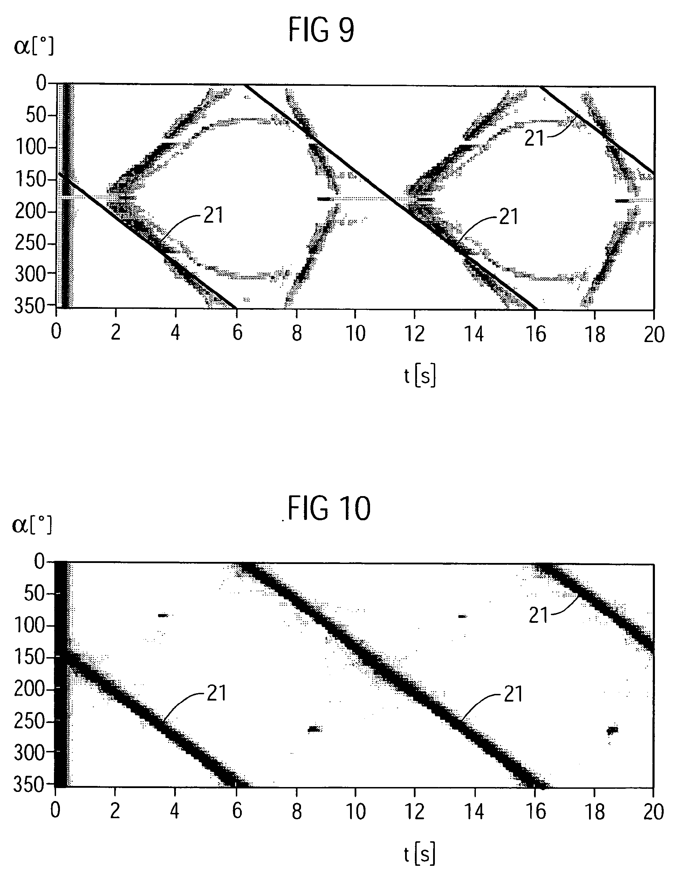

Die Figuren 9 und 10 verdeutlichen den Einfluss des Kopfeffektes auf das Ergebnis der Lokalisation einer sich um den Kopf mit konstanter Geschwindigkeit bewegenden Signalquelle anhand einer Simulation mit realen Daten, d.h. mit Daten, die in Messungen in einem hallarmen Raum gewonnen wurden. Mithilfe des Verfahrens zur Bestimmung der Einfallsrichtung werden über mehrere Sekunden hinweg die Wahrscheinlichkeiten der Einfallsrichtungen bestimmt.

Figur 9 zeigt das Ergebnis für den Fall, dass der Kopfeffekt nicht berücksichtig wird. Aufgetragen ist über die Zeit t die Wahrscheinlichkeit, dass unter einem Winkel α von 0° bis 360° das Signal der rotierenden Signalquelle empfangen wurde. Je dunkler der Grauton desto größer ist die Wahrscheinlichkeit. Der wahre Verlauf der Signalquelle ist durch eine schwarze Linie 21 gekennzeichnet.

Als erstes fällt die Symmetrie auf, die aufgrund der beiden symmetrischen Minima entsteht. Das Verfahren ermöglicht somit keine Differenzierung der beiden Hälften von 0° bis 180° und von 180° bis 360 °, d.h., die Lokalisation ist nicht eindeutig. Des Weiteren fällt auf, dass die wahre Position und die mit dem Verfahren bestimmte wahrscheinlichste Position der Signalquelle gegeben durch eines der Minima auf der nicht durch den Kopf abgeschatteten Seite wenigstens in groben Zügen übereinstimmt.

Figur 10 zeigt das Ergebnis für den Fall, dass der Kopfeffekt kompensiert wurde. Deutlich erkennt man, die gute Übereinstimmung der wahren Position mit der durch das Verfahren bestimmten, in diesem Fall eindeutigen, Position für alle Einfallswinkel von 0° bis 360°. Im Vergleich zur Figur 9 erkennt man in Figur 10 eine höhere Präzision der Messung der Einfallswinkelwahrscheinlichkeiten, da die Wahrscheinlichkeitsverteilungen einen schärferen Verlauf und bis auf 90°und 270° keine Nebenmaxima aufweisen. Die auftretende Zweideutigkeit bei 90°und 270° lässt sich durch die zugehörigen Richtcharakteristiken erklären. Diese sind sich auch unter Berücksichtigung des Kopfeffekts im Wesentlichen aufgrund der vorne - hinten Symmetrie des Kopfes sehr ähnlich, so dass das Verfahren hier nicht unterscheiden kann.

## Patentansprüche

1. Verfahren zur Bestimmung einer Einfallsrichtung eines Signals (AS2,...AS4) einer akustischen Signalquelle mithilfe eines Richtmikrofonsystems (RMS,RM1,RM2), das mindestens zwei Mikrofone (M1,...M5) aufweist, mit folgenden Verfahrensmerkmalen:
- Erzeugen einer Mehrzahl von Richtmikrofonsignalen(RMS1, RMS2) durch gewichtetes Kombinieren der Signale (S1, S2) der beiden Mikrofone (M1,...M5), wobei die Gewichtung jeweils eine richtungsabhängige Empfindlichkeitsverteilung des Richtmikrofonsignals (RMS1, RMS2) bestimmt, die in einer Richtung ein Minimum aufweist,
- Bewerten der Richtmikrofonsignale (RMS1, RMS2) nach einem Maß, dass die Beeinflussung des jeweiligen Richtmikrofonsignals (RMS1, RMS2) durch die dazugehörige richtungsabhängige Empfindlichkeitsverteilung angibt,
- Bestimmen desjenigen Richtmikrofonsignals (RMS1, RMS2), das im Vergleich mit der Mehrzahl von Richtmikrofonsignalen (RMS1, RMS2) mit einem Extremwert als Maß bewertet wurde, und bestimmen der Einfallsrichtung (α2,..α4) als diejenige Richtung, in der das Minimum der richtungsabhängigen Empfindlichkeitsverteilung dieses Richtmikrofonsignals (RMS1, RMS2) liegt.

2. Verfahren nach Anspruch 1,
**dadurch gekennzeichnet , dass** das Maß die Energie der Richtmikrofonsignale (RMS1, RMS2) ist und dass die Richtung des Minimums derjenigen Empfindlichkeitsverteilung, die die niedrigste Richtmikrofonsignalenergie aufweist, als Einfallsrichtung (α2, ...α4) bestimmt wird.

3. Verfahren nach Anspruch 1,
**dadurch gekennzeichnet , dass** das Maß die reziproke Signalenergie eines Richtmikrofonsignals (RMS1, RMS2) ist, die eine Wahrscheinlichkeit (P) angibt, mit der die Richtung des Minimums der entsprechenden Empfindlichkeitsverteilung die Einfallsrichtung des Signals (AS2,...AS4) ist.

4. Verfahren nach Anspruch 3,
**dadurch gekennzeichnet, dass** die Wahrscheinlichkeiten (P) der sich aus den Richtmikrofonsignalen (RMS1,RMS2) ergebenden Richtungen zu einer richtungsaufgelösten Wahrscheinlichkeitsverteilung (W1,W2) zusammengefasst werden.

5. Verfahren nach einem der Ansprüche 1 bis 4,
**dadurch gekennzeichnet , dass** die Gewichtung derart bestimmt wurde, dass sie die Empfindlichkeit des Richtmikrofonsystems (RMS,RM1,RM2) für eine in Bezug zum Richtmikrofonsystem (RMS, RM1, RM2) in einer Richtung liegenden Signalquelle minimiert.

6. Verfahren nach einem der Ansprüche 1 bis 5,
**dadurch gekennzeichnet , dass** die Gewichtung derart bestimmt wurde, dass sie einen Effekt des akustischen Umfelds berücksichtigt, der aufgrund der Benutzung des Richtmikrofonsystems (RMS,RM1,RM2) auftritt.

7. Verfahren nach Anspruch 6,
**dadurch gekennzeichnet , dass** die Gewichtung durch eine Messung der Empfindlichkeit des an einem Kopf (1')oder an einer Kopfimitation angeordneten Richtmikrofonsystems (RMS, RM1, RM2) bestimmt wurde.

8. Verfahren nach einem der Ansprüche 1 bis 7,
**dadurch gekennzeichnet , dass** die Gewichtung einen Amplituden- und/oder einen Phasenfaktor (K_{A}, ... K_{A4}, K_{PH},...K_{PH4}) insbesondere zur Korrektur der Amplitude bzw. der Phase eines der Mikrofonsignale (S1,S2) aufweist.

9. Verfahren nach einem der Ansprüche 1 bis 8,
**dadurch gekennzeichnet , dass** die Gewichtung, insbesondere als frequenzabhängige Kennlinie (K'_{A}), abgespeichert ist.

10. Verfahren nach einem der Ansprüche 1 bis 9,
**dadurch gekennzeichnet , dass** bei der Erzeugung der Mehrzahl von Richtmikrofonsignalen (RMS1, RMS2) die benötigten Gewichtungen aus einem Speicher gelesen werden.

11. Verfahren nach einem der Ansprüche 1 bis 10,
**dadurch gekennzeichnet , dass** die Erzeugung der Richtmikrofonsignale (RMS1, RMS2) im Wesentlichen gleichzeitig erfolgt.

12. Verfahren nach einem der Ansprüche 1 bis 10,
**dadurch gekennzeichnet , dass** sich die Gewichtung bei der Messung der Mehrzahl von Richtmikrofonsignalen (RMS1, RMS2) ändert, um nacheinander Richtmikrofonsignale (RMS1, RMS2) mit unterschiedlichen richtungsabhängigen Empfindlichkeiten zu erzeugen.

13. Verfahren nach einem der Ansprüche 1 bis 12,
**dadurch gekennzeichnet, dass** der Frequenzbereich der Mikrofonsignale (S1, S2) in Frequenzbänder (ΔF, ΔF', ΔF1, ΔF2) unterteilt wird, in denen jeweils ein Verfahren nach einem der Ansprüche 1 bis 10 durchgeführt wird.

14. Verfahren nach Anspruch 13,
**dadurch gekennzeichnet, dass** die Richtmikrofonsignale (RMS1, RMS2) nach dem Maß der Beeinflussung in mehreren Frequenzbänder (ΔF, ΔF', ΔF1, ΔF2) bewertet werden.

15. Verfahren nach einem der Ansprüche 1 bis 14,
**dadurch gekennzeichnet, dass** das Richtmikrofonsystem (RMS,RM1,RM2) mehrere Mikrofone (M1,...M5) aufweist, von denen jeweils zwei paarweise zur Messung eines Richtmikrofonsignals (RMS1,RMS2) gewichtet kombiniert werden.

16. Verfahren nach einem der Ansprüche 1 bis 15,
**dadurch gekennzeichnet , dass** mehrere Einfallsrichtungen für mehrere Signale (AS2,...AS4) von einer oder von mehreren Signalquellen anhand des Maßes für die Beeinflussung bestimmt werden.

17. Verfahren nach einem der Ansprüche 1 bis 16,
**dadurch gekennzeichnet , dass** Signale (AS2,...AS4) von Signalquellen, die in einem oder in verschiedenen Frequenzbändern (ΔF, ΔF', ΔF1, ΔF2) in verschiedene Richtungen zeigen, mithilfe einer Korrelationsanalyse insbesondere bezüglich einer Echo-Verwandtschaft untersucht werden.

18. Verfahren nach einem der Ansprüche 1 bis 17,
**dadurch gekennzeichnet, dass** die Richtung eines Minimums einer richtungsabhängigen Empfindlichkeitsverteilung experimentell durch eine Messung des Richtmikrofonsignals (RMS1, RMS2) mithilfe einer Signalquelle bestimmt wird.

19. Verfahren nach einem der Ansprüche 1 bis 18,
**dadurch gekennzeichnet, dass** die Richtung eines Minimums einer richtungsabhängigen Empfindlichkeitsverteilung mithilfe von gemessenen Übertragungsfunktionen berechnet wird.

20. Vorrichtung zum Durchführen eines Verfahrens nach einem der Ansprüche 1 bis 19 mit einem Richtmikrofonsystem (RMS,RM1,RM2), welches mindestens zwei Mikrofone (M1,...M5) aufweist.

21. Vorrichtung nach Anspruch 20,
**dadurch gekennzeichnet, dass** die beiden Mikrofone (M1,M2) jeweils mit einer Filterbank (FB1, FB2) zur Unterteilung der Mikrofonsignale (S1,S2) in Frequenzbänder (ΔF, ΔF', ΔF1, ΔF2) verbunden sind, an deren Ausgängen Frequenzband-Signalanteile der Mikrofonsignale (S1,S2) anliegen, wobei die Ausgänge der Filterbänke (FB1, FB2) mit den gleichen Frequenzbändern (ΔF, ΔF', ΔF1, ΔF2) paarweise mit einer Einheit (G1,...G4) verbunden sind, welche die Frequenzband-Signalanteile mit einer Gewichtung kombiniert, wobei die Gewichtung mittels einer die Amplitude des entsprechenden Frequenzband-Signalanteils verändernden Amplitudeneinheiten (K_{A1}, ... K_{A4} ) und/oder einer die Phase des entsprechenden Frequenzband-Signalanteils drehenden Phaseneinheit (K_{PH1},...K_{PH4}) erfolgt, wobei die Amplitudeneinheit (K_{A1}, ... K_{A4} ) und die Phaseneinheit (K_{PH1}, ... K_{PH4} ) entweder gemeinsam auf eines oder einzeln auf jeweils eines der Frequenzband-Signalanteile wirken, wobei die Einheiten (G1,...G4) mit einer Bewertungseinheit (B) verbunden sind, welche die Richtmikrofonsignale (RMS1, RMS2) nach einem Maß für die Beeinflussung bewertet und daraus eine Einfallsrichtung eines Signal (S1,...S4) einer Signalquelle bestimmt.

22. Vorrichtung nach Anspruch 21,
**dadurch gekennzeichnet , dass** mehrere in verschiedenen Frequenzbändern (ΔF, ΔF', ΔF1, ΔF2) arbeitende Bewertungseinheiten (B,B') mit einer Analyseeinheit (11) zur Erstellung einer akustischen Umfeldanalyse verbunden sind, wobei die Analyseeinheit (11) insbesondere eine Korrelationsanalyse des zeitlichen Verhaltens der identifizierten Signalquellen durchführt.
